# EUROPÄISCHE PATENTANMELDUNG

(11) **EP 2 891 770 A1**
(43) Veröffentlichungstag der Anmeldung: **08.07.2015**
(21) Anmeldenummer: 14150126.2
(22) Anmeldetag: 03.01.2014
(51) Int. Cl.: F01D 25/02, F02C 9/20, F02C 9/28

(54) **Bestimmungsverfahren und Gasturbine**

(71) Anmelder: Siemens Aktiengesellschaft, 80333 München (DE)
(72) Erfinder: Braun, Stefan, 47506 Neukirchen-Vluyn (DE); Eisfeld, Tjark, 45478 Mülheim a. d. Ruhr (DE); Link, Marco, 46049 Oberhausen (DE); Waltke, Ulrich, 45468 Mülheim an der Ruhr (DE)

(57) **Zusammenfassung**

Die Erfindung betrifft ein Bestimmungsverfahren (20) zur Bestimmung eines Endwinkels (E) von zwischen einem Anfangswinkel und dem Endwinkel (E) verstellbaren Leitschaufeln einer stromaufwärts einer hinteren Leitschaufelreihe (13) angeordneten vorderen Leitschaufelreihe (12) eines Verdichters (12) einer Gasturbine (10) zur Verhinderung einer Eisbildung in dem Verdichter (11), bei dem erfindungsgemäß während des Betriebs der Gasturbine (10) in einer Parameterermittlung (22) ein aktueller Wert zumindest eines Prozessparameters ermittelt und anschließend in einer Endwinkelfestlegung (23) der Endwinkel (E) in Abhängigkeit des Wertes festgelegt wird.

## Beschreibung

Die vorliegende Erfindung betrifft eine Gasturbine sowie ein Bestimmungsverfahren zur Bestimmung eines Endwinkels von zwischen einem Anfangswinkel und dem Endwinkel verstellbaren Leitschaufeln einer Leitschaufelreihe eines Verdichters der Gasturbine zur Verhinderung einer Eisbildung in dem Verdichter.

Es ist im Stand der Technik bekannt, bei Gasturbinen im Teillastbetrieb den vom Verdichter angesaugten Luftmassenstrom durch eine variable Anstellung der Verdichtervorleitschaufeln anzupassen. Dadurch kann bei einer gegebenen maximalen Abgastemperatur ein größtmöglicher Wirkungsgrad erzielt werden. Der zulässige Endwinkel der variablen Verdichtervorleitschaufeln ist dabei unter anderem durch eine Abkühlung der Ansaugluft im Bereich der Vorleitschaufelreihe und/oder der ersten Verdichterlaufschaufelreihe und der damit verbundenen Vereisungsgefahr limitiert. In Abhängigkeit der Feuchte der Ansaugluft kann es durch die Beschleunigung der Strömung stromabwärts der Vorleitschaufelreihe, was zur Abkühlung der Strömung führt, zu einer Vereisung im Verdichter und damit zu einer Beeinträchtigung der Maschinenintegrität und gegebenenfalls zu Maschinenschäden kommen.

Im Stand der Technik ist es üblich den Endwinkel für angenommene Werte der Prozessparameter vorab starr festzulegen. Der Fahrbereich der Gasturbine ist dadurch nicht in jeder Situation voll ausgeschöpft.

Der vorliegenden Erfindung liegt die Aufgabe zugrunde, diese Nachteile zu beheben und ein Bestimmungsverfahren zur variablen Bestimmung des Endwinkels sowie eine Gasturbine zur Ausübung dieses Bestimmungsverfahrens bereitzustellen.

Gelöst wird diese Aufgabe mit einem Bestimmungsverfahren nach Anspruch 1 sowie einer Gasturbine nach Anspruch 11. Vorteilhafte Weiterbildungen der Erfindung sind in den Unteransprüchen angegeben und in der Beschreibung beschrieben.

Bei dem erfindungsgemäßen Bestimmungsverfahren wird zur Bestimmung eines Endwinkels von zwischen einem Anfangswinkel und dem Endwinkel verstellbaren Leitschaufeln einer stromaufwärts einer hinteren Lauf- oder Leitschaufelreihe angeordneten vorderen Leitschaufelreihe eines Verdichters einer Gasturbine zur Verhinderung einer Eisbildung in dem Verdichter während des Betriebs der Gasturbine in einer Parameterermittlung ein aktueller Wert zumindest eines Prozessparameters ermittelt und anschließend in einer Endwinkelfestlegung der Endwinkel in Abhängigkeit des Wertes festgelegt.

Mit dieser Anordnung ist es vorteilhaft ermöglicht den Fahrbereich der Gasturbine zu erweitern und damit deren Einsatzmöglichkeiten und Effizienz zu vergrößern. Statt wie herkömmlich einen starr festgelegten Endwinkel zu verwenden kann der Endwinkel nun auf die aktuell herrschenden Bedingungen angepasst werden.

In einer vorteilhaften Ausführung des erfindungsgemäßen Bestimmungsverfahrens wird der Wert einer Temperatur ermittelt. Dabei kann als Temperatur eine Lufttemperatur einer Umgebung der Gasturbine ermittelt oder auch eine Oberflächentemperatur an der hinteren Lauf- oder Leitschaufelreihe ermittelt werden.

Die Temperatur ist ein wesentlicher Parameter, der Einfluss auf die Eisbildung hat. Durch die Abhängigkeit des Endwinkels von der Temperatur lässt sich eine Eisbildung leicht vermeiden. Temperaturen sind einfach und kostengünstig zu messen. Das erfindungsgemäße Bestimmungsverfahren ist dadurch einfach zu implementieren.

In einer weiteren vorteilhaften Ausführung des erfindungsgemäßen Bestimmungsverfahrens wird der Endwinkel in der Weise festgelegt, dass die Oberflächentemperatur oberhalb von 0°C bleibt.

Damit ist eine Eisbildung verhindert und der Verdichter wird vor Beschädigungen durch Eis geschützt.

In einer weiteren vorteilhaften Ausführung des erfindungsgemäßen Bestimmungsverfahrens wird der Wert einer Luftfeuchtigkeit beziehungsweise einer relativen Luftfeuchtigkeit ermittelt.

Die Luftfeuchtigkeit beziehungsweise die relative Luftfeuchtigkeit ist ein wesentlicher Parameter, der Einfluss auf die Eisbildung hat. Durch die Abhängigkeit des Endwinkels von der Luftfeuchtigkeit beziehungsweise der relativen Luftfeuchtigkeit lässt sich eine Eisbildung leicht vermeiden.

In einer weiteren vorteilhaften Ausführung des erfindungsgemäßen Bestimmungsverfahrens wird die relative Luftfeuchtigkeit stromabwärts der vorderen Leitschaufelreihe und stromaufwärts der hinteren Leitschaufelreihe ermittelt.

Dieses ist, durch die starke Beschleunigung der Luftströmung, der kälteste Ort innerhalb des Verdichters während des Betriebs der Gasturbine. Das Potenzial der Luft, Feuchtigkeit aufzunehmen, ist an diesem Ort am geringsten und die relative Luftfeuchtigkeit am größten. Durch die Parameterermittlung am kältesten Ort ist sichergestellt, dass die kälteste Temperatur in der Maschine berücksichtigt wird.

In einer weiteren vorteilhaften Ausführung des erfindungsgemäßen Bestimmungsverfahrens wird der Endwinkel in der Weise festgelegt, dass die relative Luftfeuchtigkeit kleiner als 100% bei einer Oberflächentemperatur der betroffenen Schaufel bei unterhalb Null Grad Celsius bleibt.

Damit wird verhindert, dass das von der Luft aufgenommene Wasser zu Eis werden kann.

In einer weiteren vorteilhaften Ausführung des erfindungsgemäßen Bestimmungsverfahrens wird der Wert einer aerodynamischen Drehzahl ermittelt.

Die aerodynamische Drehzahl wird bereits während des Betriebs der Gasturbine zu deren Steuerung beziehungsweise Regelung ermittelt. Die Verwendung dieser Größe zur variablen Festlegung des Endwinkels kann dadurch leicht vorgenommen werden. Zudem sind keine zusätzlichen Betriebsmessstätten nötig. Die aerodynamische Drehzahl, welche auch als reduzierte Drehzahl bekannt ist, ergibt sich aus der mechanischen Drehzahl des Rotors durch Korrektur mit der Eintrittstemperatur.

Die erfindungsgemäße Gasturbine umfasst einen Verdichter. Dieser weist eine vordere Leitschaufelreihe und stromabwärts der vorderen Leitschaufelreihe angeordnet eine hintere Lauf- oder Leitschaufelreihe auf. Die vordere Leitschaufelreihe umfasst Leitschaufeln, die zwischen einem Anfangswinkel und einem Endwinkel verstellbar sind. Die erfindungsgemäße Gasturbine verfügt zudem über zumindest eine Betriebsmessstelle und eine mit der Betriebsmessstelle datenleitend verbundene Auswerteeinheit. Die Auswerteeinheit ist ausgebildet, das erfindungsgemäße Bestimmungsverfahren durchzuführen.

Die Gasturbine kann somit die Vorteile des erfindungsgemäßen Bestimmungsverfahrens nutzen und weist einen vergrößerten Fahrbereich auf.

Ausführungsbeispiele der Erfindung werden anhand der Zeichnungen und der nachfolgenden Beschreibung näher erläutert.

Es zeigen:
- Figur 1: eine erfindungsgemäße Gasturbine,
- Figur 2: ein erfindungsgemäßes Bestimmungsverfahren,
- Figur 3: eine Parameterermittlung des Bestimmungsverfahrens und
- Figur 4: ein Diagramm beispielhafter Endwinkel.

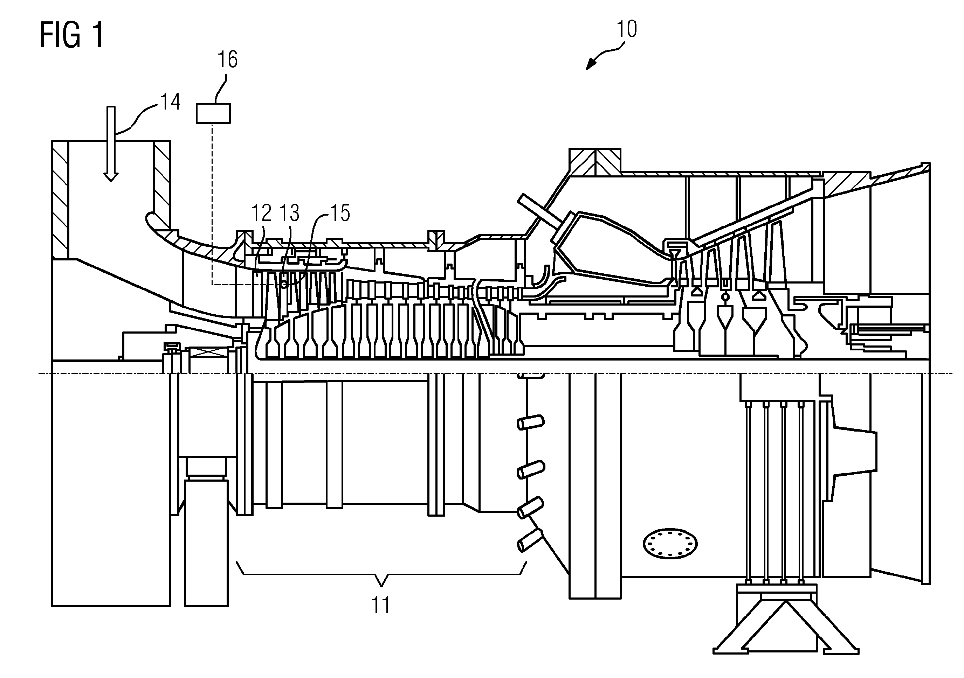

In der Figur 1 ist beispielhaft eine erfindungsgemäße Gasturbine 10 in einer Schnittdarstellung skizziert. Die Gasturbine 10 umfasst einen Verdichter 11, in dem ein angesaugter Luftmassenstrom 14 verdichtet wird. Der Verdichter 11 weist, wie im Stand der Technik üblich, Laufschaufelreihen und Leitschaufelreihen auf.

In der erfindungsgemäßen Gasturbine 10 umfasst der Verdichter 11 eine vordere Leitschaufelreihe 12 und eine hintere Leitschaufelreihe 13. Die vordere Leitschaufelreihe 12 ist stromaufwärts der hinteren Leitschaufelreihe 13 angeordnet und die hintere Leitschaufelreihe 13 ist stromabwärts der vorderen Leitschaufelreihe 12 angeordnet. Dabei ist die vordere Leitschaufelreihe 12 bevorzugt eine sogenannte Vorleitschaufelreihe 12 und die hintere Leitschaufelreihe 13 ist die stromabwärts nächst folgende sogenannte Erste Leitschaufelreihe 13. In der Weise ist es in der Figur 1 dargestellt. Dazwischen ist eine Laufschaufelreihe dargestellt.

Die vordere Leitschaufelreihe 12 weist verstellbare Leitschaufeln auf, so wie sie aus dem Stand der Technik bekannt sind. Die Leitschaufeln der hinteren Leitschaufelreihe 13 können ebenfalls verstellbar sein. Die Leitschaufeln der vorderen Leitschaufelreihe 12 sind in einem Bereich zwischen einem Anfangswinkel und einem Endwinkel E verstellbar. Mit einer Verstellung der Leitschaufeln wird der Luftmassenstrom 14, der durch die Gasturbine 10 strömt, reguliert. Der Anfangswinkel markiert die Grundstellung der Leitschaufeln, in der der größtmögliche Luftmassenstrom strömen kann. Mit Verstellen der Leitschaufeln verringert sich der Luftmassenstrom, bis mit Erreichen des Endwinkels E der Luftmassenstrom 14 minimiert ist. Je weiter entfernt der Endwinkel E vom Anfangswinkel ist, umso größer ist der Verstellbereich der Leitschaufeln.

Der Endwinkel E ist bei der erfindungsgemäßen Gasturbine 10 variabel bestimmbar. Dazu weist die Gasturbine 10 eine Auswerteeinheit 16 und eine mit der Auswerteeinheit 16 datenleitend verbundene Betriebsmessstelle 15 auf. Die Betriebsmessstelle 15 ist ausgebildet, aktuelle Werte zumindest eines Prozessparameters zu messen. Es ist auch denkbar, dass die Gasturbine 10 mehrere Betriebsmessstellen 15 zur Messung unterschiedlicher Prozessparameter aufweist. Die Betriebsmessstelle 15 ist eine Messstelle für eine Temperatur T und/oder für eine absolute Luftfeuchtigkeit H beziehungsweise für eine relative Luftfeuchtigkeit h. Zudem kann die Betriebsmessstelle 15 eine Messstelle für eine mechanische Drehzahl der Gasturbine 10 sein. Die zumindest eine Betriebsmessstelle 15 kann innerhalb der Gasturbine 10 oder außerhalb in der Umgebung der Gasturbine 10 angeordnet sein.

In der gezeigten Ausgestaltung ist die Betriebsmessstelle 15 innerhalb der Gasturbine 10 an der hinteren Leitschaufelreihe 13 angeordnet und dazu ausgebildet, die Temperatur T der Oberfläche der Leitschaufeln der hinteren Leitschaufelreihe 13 zu messen. Die mit der Betriebsmessstelle 15 verbundene Auswerteeinheit 16 bestimmt in dem erfindungsgemäßen Bestimmungsverfahren 20 den Endwinkel E.

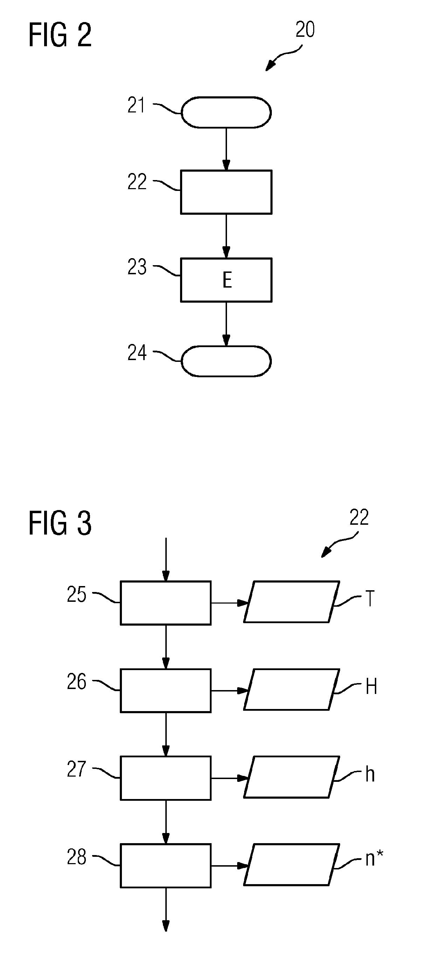

Das erfindungsgemäße Bestimmungsverfahren 20 ist beispielhaft in der Figur 2 in einem Diagramm von einem Start 21 bis zu einem Ende 24 dargestellt. Um eine Eisbildung im Verdichter 11 zu verhindern, wird erfindungsgemäß während des Betriebs der Gasturbine 10 in einer Parameterermittlung 22 ein aktueller Wert zumindest eines Prozessparameters ermittelt. Anschließend wird in einer Endwinkelfestlegung 23 der Endwinkel E in Abhängigkeit dieses Wertes festgelegt.

In der Parameterermittlung 22 kann der aktuelle Wert innerhalb oder auch außerhalb der Gasturbine detektiert werden.

Die Endwinkelfestlegung 23 kann entweder rechnerisch durch Verwendung einer hinterlegten Formel, bei der der Endwinkel E eine Funktion des ermittelten Parameters ist, oder durch Zuweisung eines Endwinkels aus einer hinterlegten Tabelle, bei der für verschiedene Werte des Parameters verschiedene Endwinkel E vordefiniert sind, erfolgen. Der Endwinkel E ist bei identischen Prozessparametern bei verschiedenen Gasturbinentypen unterschiedlich. So muss die Endwinkelfestlegung 23 für jeden Gasturbinentyp individuell erfolgen.

In der Figur 3 ist die Parameterermittlung 22 in einer beispielhaften Ausführung in einem Diagramm dargestellt. In der gezeigten Variante werden von vier verschiedenen Parametern Werte ermittelt. Erfindungsgemäß ist es zumindest einer.

In einer Temperaturermittlung 25 wird der Wert der Temperatur T ermittelt. In einer Luftfeuchtigkeitsermittlung 26 wird der Wert der Luftfeuchtigkeit H ermittelt. In einer Relative-Luftfeuchtigkeitsermittlung 27 wird der Wert der relativen Luftfeuchtigkeit h ermittelt. Und in einer Aerodynamische-Drehzahlermittlung 28 wird der Wert einer aerodynamischen Drehzahl n* ermittelt.

Die Temperaturermittlung 25 kann innerhalb oder außerhalb der Gasturbine 10 erfolgen. Als Temperatur T kann eine Lufttemperatur einer Umgebung der Gasturbine 10 und/oder eine Lufttemperatur des Luftmassenstroms 14 oder auch eine Oberflächentemperatur an einer Materialoberfläche im Inneren der Gasturbine, insbesondere eine Oberflächentemperatur der hinteren Leitschaufelreihe 13 ermittelt werden. Im Inneren der Gasturbine 10 wird die Lufttemperatur insbesondere stromabwärts der vorderen Leitschaufelreihe 12 und stromaufwärts der hinteren Leitschaufelreihe 13 ermittelt, weil dort der kälteste Ort ist. Der Endwinkel E wird insbesondere in der Weise abhängig von der Temperatur T gewählt, dass die Temperatur T, insbesondere die Oberflächentemperatur der hinteren Leitschaufelreihe 13, oberhalb von 0°C bleibt.

Der Ort, an dem die Oberflächentemperatur der Leitschaufel ermittelt wird, liegt insbesondere an einer Schaufelvorderkante, insbesondere an einem äußeren Bereich der Schaufelvorderkante, insbesondere auf etwa einem Viertel der Höhe der Leitschaufel radial in Richtung der Rotationsachse betrachtet. An dieser Stelle wird der kälteste Punkt der Oberfläche Leitschaufel erwartet. Idealerweise wird der Ort, an dem die Oberflächentemperatur der Leitschaufel ermittelt wird, für jede Gasturbine und insbesondere jede Betriebsweise individuell ermittelt. Die Oberflächentemperatur kann dabei auch berührungslos ermittelt werden.

Die Luftfeuchtigkeitsermittlung 26 sowie auch die Relative-Luftfeuchtigkeitsermittlung 27 können ebenfalls innerhalb oder außerhalb der Gasturbine 10 erfolgen. Die Luftfeuchtigkeit H oder die relative Luftfeuchtigkeit h wird insbesondere innerhalb des Luftmassenstroms 14 ermittelt. Insbesondere wird die relative Luftfeuchtigkeit h stromabwärts der vorderen Leitschaufelreihe 12 und stromaufwärts der hinteren Leitschaufelreihe 13 ermittelt, weil dort der kälteste Ort ist und bei konstanter Luftfeuchte H somit auch der Ort mit der höchsten relativen Luftfeuchtigkeit h. Der Endwinkel E wird insbesondere in der Weise festgelegt, dass die relative Luftfeuchtigkeit h kleiner als 100% bleibt.

Die Aerodynamische-Drehzahlermittlung 28 erfolgt durch Messung der mechanischen Drehzahl der Gasturbine 10 sowie der Temperatur T. Der Endwinkel E kann dann als Funktion von der aerodynamischen Drehzahl n* gebildet werden, welche durch Korrektur mit einer Eintrittstemperatur aus der mechanischen Drehzahl abgeleitet werden kann. Details hierzu sind im Buch "Stationäre Gasturbinen" (1. Auflage) vom Herausgeber Jörg Seume auf Seite 346 beschrieben.

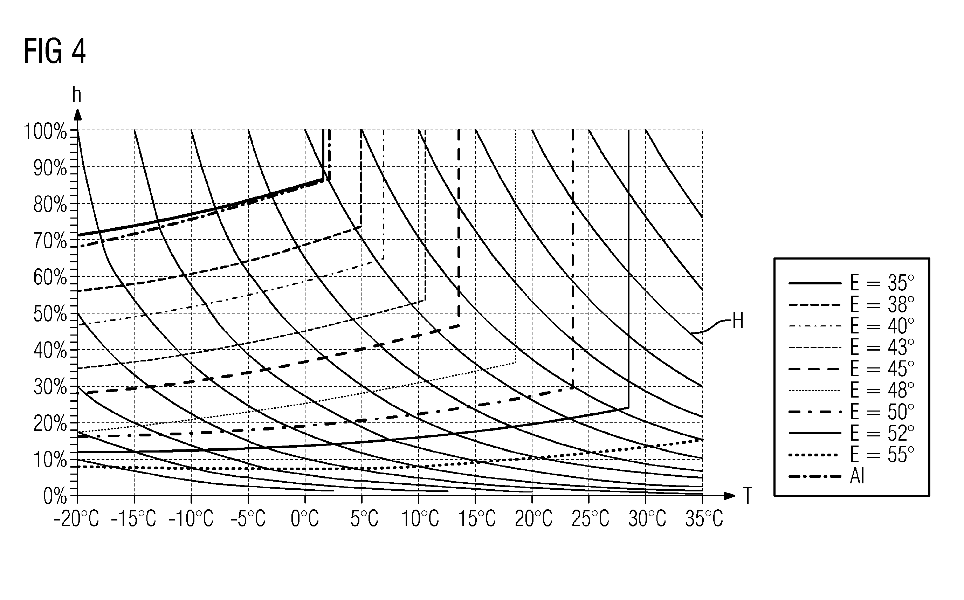

Die Figur 4 zeigt zur Veranschaulichung beispielhaft die Endwinkel E in Abhängigkeit von der Temperatur T und der relativen Luftfeuchtigkeit h für einen bestimmten Gasturbinentyp. Die Werte für die Luftfeuchtigkeit H sind hier beispielhaft auf Konstanten abgetragen. Die Endwinkel E reichen hier von 35°C bis 55°C. Zudem zeigt die Figur 4 die Grenzlinie für ein im Stand der Technik als "Anti Icing" bekanntes Eisschutzverfahren AI. Beim dem Eisschutzverfahren AI wird der Luftmassenstrom 14 insbesondere mit einem weiter stromabwärts entnommenem wärmeren Luftstrom erwärmt. Das erfindungsgemäße Bestimmungsverfahren 20 kann auch während des Eisschutzverfahrens AI oder einer anderen Luftvorwärmung ausgeführt werden.

Die Eisbildung entsteht, wenn sowohl die Temperatur unter 0°C liegt als auch die relative Feuchte auf der betroffenen Schaufel größer als 100% ist. Dies trifft für die Lauf- und die Leitschaufeln zu. Das Einfrieren der Laufschaufel ist aufgrund der Fliehkräfte im Betrieb jedoch unwahrscheinlicher und wird deshalb in der Praxis weniger betrachtet, auch wenn die kälteste Temperatur an der Laufschaufel erwartet wird. Die Messung der tiefsten Temperatur an der Laufschaufel ist grundsätzlich möglich, allerdings schwieriger als an der Leitschaufel durchzuführen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Bestimmungsverfahren (20) zur Bestimmung eines Endwinkels (E) von zwischen einem Anfangswinkel und dem Endwinkel (E) verstellbaren Leitschaufeln einer stromaufwärts einer hinteren Lauf- oder Leitschaufelreihe (13) angeordneten vorderen Leitschaufelreihe (12) eines Verdichters (12) einer Gasturbine (10) zur Verhinderung einer Eisbildung in dem Verdichter (11),
**dadurch gekennzeichnet, dass**
während des Betriebs der Gasturbine (10) in einer Parameterermittlung (22) ein aktueller Wert zumindest eines Prozessparameters ermittelt und anschließend in einer Endwinkelfestlegung (23) der Endwinkel (E) in Abhängigkeit des Wertes festgelegt wird.

2. Bestimmungsverfahren (20) nach Anspruch 1,
wobei der Wert zumindest einer Temperatur (T) ermittelt wird.

3. Bestimmungsverfahren (20) nach Anspruch 2,
wobei als Temperatur (T) eine Lufttemperatur einer Umgebung der Gasturbine (10) ermittelt wird.

4. Bestimmungsverfahren (20) nach Anspruch 2 oder 3,
wobei als Temperatur (T) eine Oberflächentemperatur an der hinteren Lauf- oder Leitschaufelreihe (13) ermittelt wird.

5. Bestimmungsverfahren (20) nach Anspruch 4,
wobei der Endwinkel (E) in der Weise festgelegt wird, dass die Oberflächentemperatur an der hinteren Lauf- oder Leitschaufelreihe (13) oberhalb von 0°C bleibt.

6. Bestimmungsverfahren (20) nach einem der Ansprüche 1 bis 4,
wobei der Wert einer Luftfeuchtigkeit (H) ermittelt wird.

7. Bestimmungsverfahren (20) nach einem der Ansprüche 1 bis 6,
wobei der Wert einer relativen Luftfeuchtigkeit (h) ermittelt wird.

8. Bestimmungsverfahren (20) nach Anspruch 7,
wobei die relative Luftfeuchtigkeit (h) stromabwärts der vorderen Leitschaufelreihe (12) und stromaufwärts der hinteren Leitschaufelreihe (13) ermittelt wird.

9. Bestimmungsverfahren (20) nach Anspruch 8,
wobei der Endwinkel (E) in der Weise festgelegt wird, dass die relative Luftfeuchtigkeit (h) kleiner als 100% bleibt.

10. Bestimmungsverfahren (20) nach einem der Ansprüche 1 bis 7,
wobei als Prozessparameter eine aerodynamische Drehzahl (n*) ermittelt wird.

11. Gasturbine (10) mit einem Verdichter (11),
der eine vordere Leitschaufelreihe (12) mit zwischen einem Anfangswinkel und einem Endwinkel (E) verstellbaren Leitschaufeln und stromabwärts der vorderen Leitschaufelreihe (12) angeordnet eine hintere Leitschaufelreihe (13) aufweist,
zumindest einer Betriebsmessstelle (15) und einer mit der Betriebsmessstelle (15) datenleitend verbundenen Auswerteeinheit (16),
die ausgebildet ist, ein Bestimmungsverfahren nach einem der Ansprüche 1 bis 10 durchzuführen.
